# EUROPÄISCHE PATENTSCHRIFT

(11) **EP 4 199 691 B1**
(45) Veröffentlichungstag und Bekanntmachung des Hinweises auf die Patenterteilung: **10.12.2025**
(21) Anmeldenummer: 21754992.2
(22) Anmeldetag: 10.08.2021
(51) Int. Cl.: A01C 7/04, A01C 7/08

(54) **KORNVEREINZELUNGSVORRICHTUNG MIT ABSCHEIDEEINRICHTUNG UND SÄMASCHINE MIT KORNVEREINZELUNGSVORRICHTUNG**
GRAIN-SINGULATING APPARATUS WITH SEPARATING DEVICE, AND SEEDER WITH GRAIN-SINGULATING APPARATUS
DISPOSITIF DE SÉLECTION DE GRAINES COMPORTANT UN SYSTÈME DE SÉPARATION ET SEMOIR ÉQUIPÉ DUDIT DISPOSITIF DE SÉLECTION DE GRAINES

(30) Priorität: 20.08.2020 DE 102020121869
(43) Veröffentlichungstag der Anmeldung: 28.06.2023
(73) Patentinhaber: Amazonen-Werke H. Dreyer SE & Co. KG, 49205 Hasbergen (DE)
(72) Erfinder: LUEBBEN, Jan-Eike, 26188 Edewecht (DE); WIEN, Thomas, 28816 Stuhr (DE)
(86) Internationale Anmeldenummer: PCT/EP2021/072213
(87) Internationale Veröffentlichungsnummer: WO 2022/037992

(56) Entgegenhaltungen:
- EP-A1- 3 335 535
- EP-A1- 3 586 586
- EP-A1- 3 704 923
- WO-A1-2011/056123
- WO-A1-2013/180619

## Beschreibung

Die Erfindung betrifft eine Kornvereinzelungsvorrichtung gemäß dem Oberbegriff des Patentanspruches 1 und eine Sämaschine gemäß dem Oberbegriff des Patentanspruches 14.

Eine derartige Sämaschine mit einer Kornvereinzelungsvorrichtung ist in der nicht vorveröffentlichten deutschen Anmeldung mit der Anmeldenummer 102019130231 beschrieben. Diese Kornvereinzelungsvorrichtung weist in an sich bekannter Weise eine Dosierkammer mit einer darin angeordneten Vereinzelungsscheibe mit Kornmitnahmeöffnungen auf. Der Dosierkammer ist mittels zumindest einem Versorgungskanal ein von einem Gebläse erzeugter Vereinzelungsluftstrom zuleitbar, so dass Körner mittels der Vereinzelungsscheibe anhand einer so entstehenden Druckdifferenz vereinzelbar sind. Die zu vereinzelnden Körner werden der Kornvereinzelungsvorrichtung über einen Förderkanal in Form eines von einem Gebläse und einem Vorratsbehälter erzeugten Korn-Luft-Mischstroms zugeführt. Um die Körner aus dem Korn-Luft-Mischstrom abzuscheiden und der Vereinzelungsscheibe über einen Saatgutschacht von der Abscheideeinrichtung zur Dosierkammer zur Vereinzelung bereit zu stellen, ist dem Förderkanal eine Abscheideeinrichtung zugeordnet. Aus der Abscheidung der Körner aus dem Korn-Luft-Mischstrom resultiert ferner ein Abluftstrom, welcher über einen von dem Versorgungskanal getrennten Abluftkanal der Kornvereinzelungsvorrichtung zur Vereinzelung der Körner zugeleitet wird.

Der Abluftkanal wird bei dieser Kornvereinzelungsvorrichtung aufwändig aus der Abscheideeinrichtung nach außen geführt. Um den Abluftstrom an gewünschter Stelle der Kornvereinzelungsvorrichtung wieder zuzuleiten ist somit eine zusätzliche Schlauchleitung benötigt. Diese Schlauchleitung ist einerseits den rauen Umgebungsbedingungen während des Arbeitseinsatzes der Sämaschine auf dem Feld ausgesetzt und muss andererseits zusätzlich besonders zuverlässig dicht gehalten werden, um die Funktionsweise der Kornvereinzelungsvorrichtung zu gewährleisten. Versuche haben gezeigt, dass diese

Kornvereinzelungsvorrichtung somit einen gesteigerten Wartungsaufwand bedingt.

Eine weitere Kornvereinzelungsvorrichtung ist aus der WO 2013/180619 A1 bekannt. Diese beschreibt ein landwirtschaftliches Werkzeug umfassend eine Vorrichtung zum Zuführen von körnigem Gut wie Saatgut, Dünger oder Pestizid, umfassend mindestens zwei Dosiervorrichtungen.

Die EP 3 586 586 A1 beschreibt ein Saatgutversorgungssystem, das eine Dosiervorrichtung mit einem Saatgutreservoir umfasst, das mit einem Dosierdruck beaufschlagt wird, der in einem gewünschten Druckbereich liegt.

Die WO 2011/056123 A1 beschreibt ein Aussaatverfahren an einer Sämaschine mit mindestens einem Saatgutbehälter für Saatgutkörner oder dergleichen und mehreren Werkzeugen zum Einbringen der Saatgutkörner in den Boden, wobei die Sämaschine ein pneumatisches Mittel in Form mindestens einer Druckquelle, wie einem Gebläse, zum Transport der Saatgutkörner vom Saatgutbehälter zu den Werkzeugen aufweist.

Aus der nicht vorveröffentlichten EP 3 704 923 A1 ist eine in einem Gehäuse eines Säherzens angeordnete Vereinzelungseinrichtung bekannt, bei der ein Teilstrom eines druckbeaufschlagten Luftstroms, welcher dem Transport von Saatkörnern dient, über einen Bypass-Kanal ins Innere des Gehäuses gelangt.

Es besteht daher Bedarf für Kornvereinzelungsvorrichtungen mit verbesserter Abluftführung und Sämaschinen mit derartigen Kornvereinzelungsvorrichtungen.

Diese Aufgabe wird erfindungsgemäß durch eine Kornvereinzelungsvorrichtung gemäß Anspruch 1 und eine Sämaschine gemäß Anspruch 14.

Demnach umfasst die Kornvereinzelungsvorrichtung eine Dosierkammer und eine darin angeordnete Dosierscheibe, zumindest einen Versorgungskanal zur Zuleitung eines von einem Gebläse erzeugten Vereinzelungsluftstroms in die Dosierkammer zur Vereinzelung von Körnern mittels der Vereinzelungsscheibe, einen Förderkanal zum Zuführen der Körner in Form eines von einem Gebläse und einem Vorratsbehälter erzeugten Korn-Luft-Mischstroms und eine dem Förderkanal zugeordneten Abscheideeinrichtung, um die Körner aus dem Korn-Luft-Mischstrom abzuscheiden und der Vereinzelungsscheibe über einen Saatgutschacht zur Vereinzelung bereit zu stellen und den daraus resultierenden Abluftstrom über einen von dem Versorgungskanal getrennten Abluftkanal der Kornvereinzelungsvorrichtung zur Vereinzelung der Körner zuzuleiten.

Erfindungsgemäß ist vorgesehen, dass der Abluftkanal eine Auslassöffnung zur Mündung des Abluftstroms aufweist und sich von der Abscheideeinrichtung durch den Saatgutschacht erstreckt, so dass die Auslassöffnung in die Dosierkammer mündet.

Die Erfindung macht sich die Erkenntnis zunutze, dass der Abluftkanal durch die erfindungsgemäße Führung durch den Saatgutschacht hindurch in vorteilhafter Weise sowohl im Arbeitseinsatz als auch in Transport- oder Parkposition vor äußeren Umwelteinflüssen geschützt ist. Der Wartungsaufwand ist somit erheblich reduziert. Ferner kann die Abscheideeinrichtung infolge dieser Maßnahme wesentlich robuster und luftdichter ausgeführt werden, da eine aufwändige Führung des Abluftkanals nach außen entfällt. Dies ist ebenfalls der Funktionssicherheit der Kornvereinzelungsvorrichtung zuträglich. Eine zusätzliche Schlauchleitung, wie bisher, wird somit nicht mehr benötigt, da der Abluftkanal erfindungsgemäß in den Saatgutschacht integriert ist. Das Gebläse zur Erzeugung des Vereinzelungsluftstroms und das Gebläse zur Erzeugen des Korn-Luft-Mischstroms können in vorteilhafter Weise zwei separate Gebläse sein. Alternativ ist denkbar nur ein einziges Gebläse einzusetzen.

In einer vorteilhaften Weiterbildung der erfindungsgemäßen Kornvereinzelungsvorrichtung ist der Abluftkanal mittels eines Trennelements als Teil des Saatgutschachtes ausgebildet. Das Trennelement erstreckt sich vorzugsweise von der Abscheideeinrichtung bis zur Auslassöffnung, so dass es dazu eingerichtet ist, den Ablufstrom von den mittels der Abscheideeinrichtung abgeschiedenen Körnern, insbesondere pneumatisch, zu trennen. Der Abluftkanal ist somit in den Saatgutschacht integriert, das heißt der Abluftkanal wird zumindest teilweise durch die Wandungen des Saatgutschachtes gebildet und durch das Trennelement von dem übrigen Saatgutschacht separiert.

In einer weiteren vorteilhaften Weiterbildung der Erfindung ist vorgesehen, dass das Trennelement als flächiges Bauteil, insbesondere als Trennblech, ausgeführt ist. In vorteilhafter Weise wird der vorhandene Bauraum somit ideal genutzt und es entstehen insbesondere keine Hinterschnitte in denen sich Ablagerungen bilden können oder wo sich Körner von außen ansammeln.

Die erfindungsgemäße Kornvereinzelungsvorrichtung ist ferner vorteilhaft dadurch weiterbildet, dass der Versorgungskanal eine Zuleitöffnung zur Mündung des Vereinzelungsluftstroms in die Dosierkammer aufweist, dass die Zuleitöffnung des Versorgungskanals und die Auslassöffnung des Abluftkanals zumindest annährend den gleichen Abstand zu der Vereinzelungsscheibe, insbesondere zu einer Ebene, die sich radial durch die Vereinzelungsscheibe erstreckt, aufweisen. Untersuchungen haben gezeigt, dass der Abluftstrom und der Vereinzelungsluftstrom sich infolge dieser Anordnung in überraschender Weise besonders vorteilhaft zur Vereinzelung der Körner ergänzen. Ferner entstehen infolge dieser Maßnahme im Versorungskanal und im Abluftkanal besonders günstige Druckverhältnisse.

Um auf der Vereinzelungsscheibe anhaftende, vereinzelte Körner nicht abzublasen, ist in einer weiteren vorteilhaften Weiterbildung der Erfindung vorgesehen, dass die Zuleitöffnung des Versorgungskanals derart angeordnet ist, dass eine Strömung des Vereinzelungsluftstroms aus der Zuleitöffnung keinen Schnittpunkt mit einer Ebene aufweist, die sich radial durch die Vereinzelungsscheibe erstreckt. Die Zuleitöffnung weist somit weg von der Vereinzelungsscheibe oder ist zumindest annährend parallel zu der Vereinzelungsscheibe angeordnet. Ferner werden pneumatische Turbulenzen in der Dosierkammer infolge dieser Maßnahme reduziert.

Um pneumatischen Turbulenzen in der Dosierkammer weiter zu reduzieren, ist in einer weiteren vorteilhaften Weiterbildung die Auslassöffnung des Abluftkanals derart angeordnet, dass eine Strömung des Abluftstroms aus der Auslassöffnung keinen Schnittpunkt mit einer Ebene aufweist, die sich radial durch die Vereinzelungsscheibe erstreckt. Die Auslassöffnung weist somit weg von der Vereinzelungsscheibe oder ist zumindest annährend parallel zu der Vereinzelungsscheibe angeordnet, so dass auf der Vereinzelungsscheibe anhaftende Körner nicht von dem Abluftstrom erfasst und von der Vereinzelungsscheibe abgeblasen werden. Vorzugsweise ist die Auslassöffnung derart angeordnet, dass die Richtung des Abluftstroms zumindest annährend die Mittelachse der Vereinzelungsscheibe schneidet.

In einer weiter vorteilhaften Ausführungsform der erfindungsgemäßen Kornvereinzelungsvorrichtung weist die Abscheideeinrichtung ein zumindest teilweise luftdurchlässiges Element zur Trennung des Korn-Luft-Mischstroms in Körner und Abluftstrom auf, das vorzugsweise als Siebelement ausgebildet ist. Besonders vorzugsweise ist das luftdurchlässige Element zylinderförmig ausgebildet. Insbesondere kann das zumindest teilweise luftdurchlässige Element aus röhrenförmiges Siebelement ausgeführt sein.

In einer weiteren besonders vorteilhaften Ausführungsform der erfindungsgemäßen Kornvereinzelungsvorrichtung ist vorgesehen, dass der Förderkanal eine Fördermündung, aus der der Korn-Luft-Mischstrom insbesondere an die Abscheideeinrichtung übergeben wird, aufweist, dass die Fördermündung in Schwerkraftrichtung einen Abstand von weniger als dem Zweifachen eines Durchmessers des Förderkanals zu dem luftdurchlässigen Element aufweist. Bei bestimmungsgemäßem Gebrauch der Kornvereinzelungsvorrichtung ist die Abscheideeinrichtung oberhalb der Dosierkammer angeordnet, so dass die abgeschiedenen Körner insbesondere mittels Schwerkraft durch den Saatgutschacht und einen Absperrschieber hindurch der Vereinzelungsscheibe bereitgestellt werden können. Der Förderkanal wird der Abscheideeinrichtung bei bestimmungsgemäßem Gebrauch vorzugsweise von oben zugeführt, so dass die Körner unter Schwerkraftwirkung in die Abscheideeinrichtung eintreten und nicht in dem Förderkanal zu Verstopfung führen können.

Um sicherzustellen, dass das zumindest teilweise luftdurchlässige Element jederzeit zumindest teilweise nicht von Körnern bedeckt ist und somit luftdurchlässig bleibt, ist in einer weiteren vorteilhaften Weiterbildung die Fördermündung in Schwerkraftrichtung zumindest teilweise unterhalb des luftdurchlässigen Elements angeordnet. Das zumindest teilweise luftdurchlässige Element bleibt somit oberhalb der Fördermündung zumindest annährend frei von Körnern. In vorteilhafter Weise baut sich somit zumindest annährend kein pneumatischer Staudruck auf die abgeschiedenen Körner im Saatgutschacht auf, so dass Brückenbildung und Verstopfungen vorgebeugt wird.

Um die Reinung, Wartung und den Austausch des zumindest teilweise luftdurchlässigen Elements zu erleichtern, ist in einer weiteren vorteilhaften Weiterbildung der erfindungsgemäßen Kornvereinzelungsvorrichtung vorgesehen, dass das zumindest teilweise luftdurchlässige Element werkzeuglos aus einer, vorzugsweise formschlüssigen, Befestigung an der Abscheideeinrichtung entnehmbar ist.

In einer weiteren vorteilhaften Ausführungsform der Kornvereinzelungsvorrichtung schließt der Abluftkanal sich unmittelbar an das zumindest teilweise luftdurchlässige Element an. Der Abluftstrom wird somit nahezu Leckage frei an den Abluftkanal übergeben, so dass eine möglichst große Luftmenge zur Vereinzelung der Körner genutzt werden kann. Der Wirkungsgrad der Kornvereinzelungsvorrichtung ist somit in zweckmäßiger Weise erhöht.

Um einem Benutzer die Kontrolle der Abscheideeinrichtung zu erleichtern, ist in einer weiteren vorteilhaften Weiterbildung der erfindungsgemäßen Kornvereinzelungsvorrichtung vorgesehen, dass die Abscheideeinrichtung ein Sichtfenster zur Sichtkontrolle des zumindest teilweise luftdurchlässigen Elements aufweist. Die zu vereinzelnden Körner sind regelmäßig mit sogenannter Beize belegt, die sich während der Arbeit von den Körnern lösen und die Abscheideeinrichtung, insbesondere das zumindest teilweise luftdurchlässige Element, verstopfen können, so dass es dem Benutzer infolge dieser Maßnahme erleichtert ist Fehlfunktionen zu vermeiden. Die Abscheideeinrichtung kann zweiteilig, vorzugsweise aus einem Ober- und einem Unterteil, ausgeführt sein. Das Sichtfenster kann an der Oberseite, vorzugsweise in dem Oberteil, der Abscheideeinrichtung angeordnet sein, so dass der Benutzer dieses besonders einfach und zweckmäßig von oben einsehen kann. Vorzugsweise ist das Oberteil aus transparenten Material geschaffen, so dass das gesamte Oberteil als Sichtfenster dienen kann.

In einer weiteren vorteilhaften Weiterbildung der erfindungsgemäßen Kornvereinzelungsvorrichtung ist vorgesehen, dass der Förderkanal eine Fördermündung, aus der der Korn-Luft-Mischstrom insbesondere an die Abscheideeinrichtung übergeben wird, aufweist, dass die Fördermündung einen Abstand von der Unterkante der Abscheideeinrichtung und/oder dem Saatgutschacht aufweist, der maximal dem Vierfachen eines Durchmessers des Förderkanals entspricht. Vorzugsweise entspricht der Abstand zwischen der Fördermündung und der Unterkante der Abscheideeinrichtung und/oder dem Saatgutschacht weniger als dem Vierfachen eines Durchmessers des Förderkanals. Die Abscheideeinrichtung weist somit einen besonders kompakten Aufbau auf. Ferner ist der pneumatische Druck und der Druck aus der Gewichtskraft der Körner selbst auf die abgeschiedenen Körner in dem Saatgutschacht infolge dieser Maßnahme reduziert, was Brückenbildung und Verstopfungen in vorteilhafter Weise abträglich ist.

Die Aufgabe wird ferner durch eine Sämaschine mit zumindest einem Gebläse, zumindest einem Vorratsbehälter für körniges Gut und zumindest einer Kornvereinzelungsvorrichtung, wobei das zumindest eine Gebläse zur Erzeugung zumindest eines Vereinzelungsluftstroms und/oder zumindest eines Korn-Luft-Mischstroms mit in dem Vorratsbehälter bevorrateten Körnern eingerichtet ist gelöst. Erfindungsgemäß ist vorgesehen, dass die zumindest eine Kornvereinzelungsvorrichtung nach zumindest einer der vorstehenden Ausführungsformen ausgebildet ist. Für die erfindungsgemäßen Vorteile und Weiterbildungen wird auf die Ausführungsformen der Kornvereinzelungsvorrichtung verwiesen.

Vorzugsweise weist die Sämaschine eine Mehrzahl von Kornvereinzelungsvorrichtungen auf, wobei die Sämaschine eine entsprechende Mehrzahl von Versorgungskanälen und Förderkanälen umfasst, um den Kornvereinzelungsvorrichtungen jeweils einen Vereinzelungsluftstrom und einen Korn-Luft-Mischstrom zuzuleiten. Es ist denkbar, dass die Sämaschine zumindest zwei Kornvereinzelungsvorrichtungen mit einem einzigen Förderkanal zwischen zumindest einer der zumindest zwei Kornvereinzelungsvorrichtungen und dem Vorratsbehälter mit dem Gebläse versorgt, wobei von der mit dem Förderkanal verbundenen Kornvereinzelungsvorrichtung der Korn-Luft-Mischstrom zumindest teilweise an die zumindest eine weitere Kornvereinzelungvorrichtung mittels eines Zwischenförderkanals weiterleitbar ist. Der Zwischenförderkanal kann als Y-förmiges Zwischenstück ausgebildet sein oder ein solches Zwischenstück umfassen. - Es ist ebenso denkbar, dass die Sämaschine separate Förderkanäle und/oder Versorgungskanäle für jede Kornvereinzelungvorrichtung aufweist. Die Sämaschine kann ein Gebläse zur Erzeugung der Vereinzelungsluftströme und der Korn-Luft-Mischströme aufweisen oder die Vereinzelungsluftströme und Korn-Luft-Mischströme mittels separater Gebläse bereitstellen. Der Vorratsbehälter kann eine Dosiereinrichtung aufweisen zur geregelten Abgabe der Menge von Körnern in den zumindest einen Förderkanal. Die Sämaschine kann eine Verteilereinheit für den Korn-Luft-Mischstrom aufweisen, an der einerseits zumindest ein Gebläse und zumindest ein Vorratsbehälter angeschlossen ist und von der sich andererseits eine Mehrzahl von Förderkanälen zu den Kornvereinzelungsvorrichtungen erstrecken. Die Sämaschine kann zwei oder mehr Vorratsbehälter aufweisen, zumindest ein Vorratsbehälter kann hierbei der Bevorratung von Dünger dienen.

Weitere Einzelheiten der Erfindung sind der Beispielsbeschreibung und den Zeichnungen zu entnehmen. Die Zeichnungen zeigen
- Fig.1: eine schematische Sämaschine mit einer erfindungsgemäßen Kornvereinzelungsvorrichtung,
- Fig.2: eine erfindungsgemäße Kornvereinzelungsvorrichtung in perspektivischer Detailansicht,
- Fig.3: die Kornvereinzelungsvorrichtung in Schnittansicht, und
- Fig.4: eine weitere Ausführungsform einer Kornvereinzelungsvorrichtung in Schnittansicht.

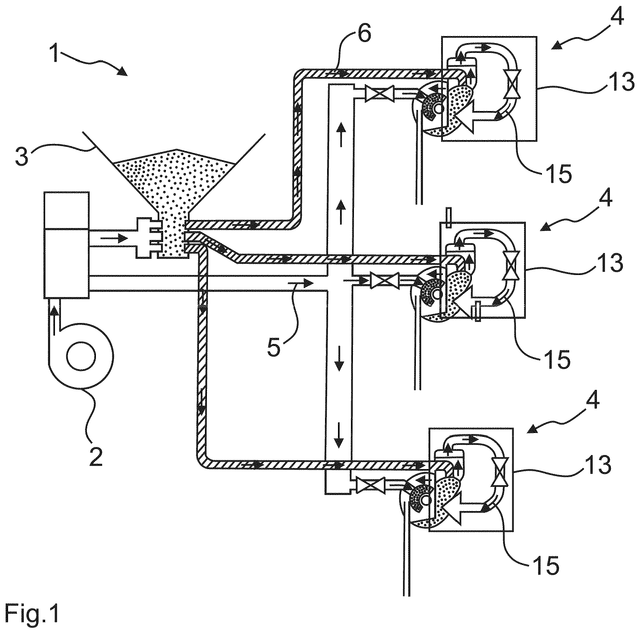

Eine erfindungsgemäße Sämaschine 1 ist in schematischer Ansicht in Fig.1 zu sehen. Die Sämaschine 1 umfasst ein Gebläse 2, einen Vorratsbehälter 3 für körniges Gut, in diesem Fall zu vereinzelndes Saatgut, und eine Mehrzahl von Kornvereinzelungsvorrichtungen 4, wobei beispielhaft nur drei der Mehrzahl von Kornvereinzelungsvorrichtungen 4 abgebildet sind. Das Gebläse 2 ist zur Erzeugung eines Vereinzelungsluftstroms 5 und eines Korn-Luft-Mischstroms 6, der sich in mehrere Korn-Luft-Mischströme 6 aufteilt, mit in dem Vorratsbehälter 3 bevorrateten Saatgutkörnern eingerichtet. In einer alternativen, nicht gezeigten, Ausführungsform ist denkbar, dass zur Erzeugung des Vereinzelungsluftstroms 5 und des Korn-Luft-Mischstroms 6 separate Gebläse 2 vorgesehen sind. Von dem Gebläse 2 und dem Vorratsbehälter 3 werden den einzelnen Kornvereinzelungsvorrichtungen 4 jeweils ein Vereinzelungsluftstrom 5 und ein Korn-Luft-Mischstrom 6 zugeleitet, so dass den Kornvereinzelungsvorrichtungen 4 Saatgutkörner und ein Vereinzelungsluftstrom 5 zur Arbeit zur Verfügung stehen.

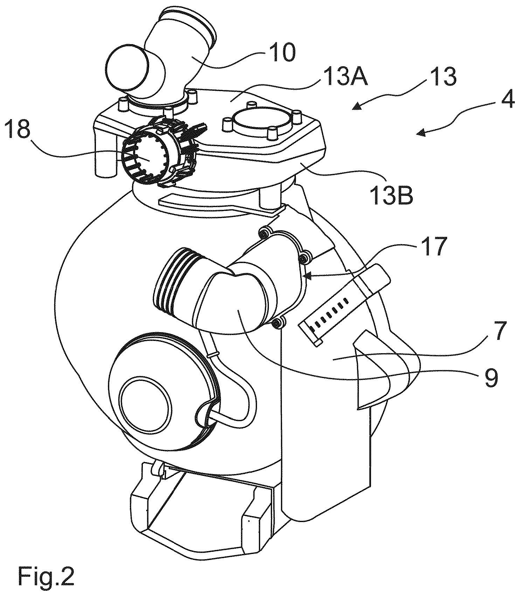

Die Kornvereinzelungsvorrichtungen 4 arbeiten folgender Weise: Die Kornvereinzelungsvorrichtung 4, wie in Fig.2 gezeigt, weist eine Dosierkammer 7 mit einer darin angeordneten Vereinzelungsscheibe 8 auf. Der von dem Gebläse 2 erzeugte Vereinzelungsluftstrom 5 ist der Dosierkammer 7 mittels eines Versorgungskanals 9 zuleitbar. Der Vereinzelungsluftstrom 5 sorgt in an sich bekannter Weise dafür, dass in regelmäßigen Abständen Saatkörner an der Vereinzelungsscheibe 8 anhaften und so vereinzelt werden. Um der Kornvereinzelungsvorrichtung 4 Saatgutkörner zur Vereinzelung bereitszustellen, ist ein Förderkanal 10 vorgesehen. Mittels des Förderkanals 10 werden die Körner in Form des von dem Gebläse 2 und dem Vorratsbehälter 3 erzeugten Korn-Luft-Mischstroms 6 zugeführt. Um die Saatkörner aus dem Korn-Luft-Mischstrom 6 abzuscheiden und der Vereinzelungsscheibe 8 über einen Saatgutschacht 11 zur Vereinzelung bereit zu stellen und den daraus resultierenden Abluftstrom 15 über einen von dem Versorgungskanal 9 getrennten Abluftkanal 12 ebenfalls zur Vereinzelung zuzuleiten, ist eine Abscheideeinrichtung 13 vorgesehen.

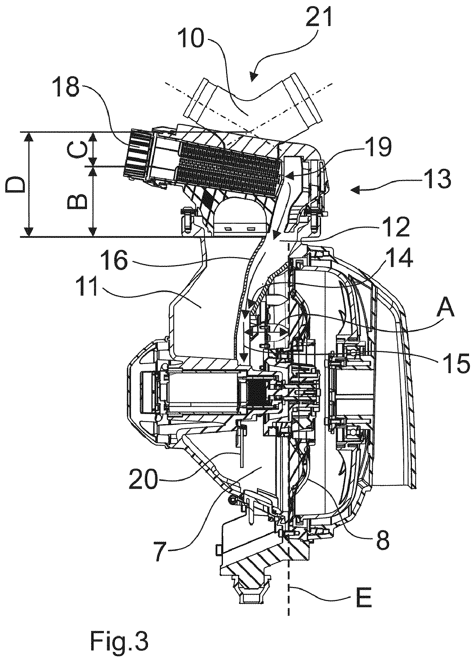

Wie Fig.3 zeigt, weist der Abluftkanal 12 eine Auslassöffnung 14 zur Mündung des Abluftstroms 15 in die Dosierkammer 7 auf. Der Abluftkanal 12 erstreckt sich ferner von der Abscheideeinrichtung 13 durch den Saatgutschacht 11, so dass die Auslassöffnung 14 direkt in die Dosierkammer 7 mündet. Der Abluftkanal 12 ist somit in den Saatgutschacht 11 integriert, was den Vorteil hat, dass er nicht den Umgebungsbedingungen ausgesetzt und somit langlebiger gestaltet ist. Um den Abluftkanal 12 in den Saatgutschacht 11 zu integrieren, ist ein Trennelement 16 vorgesehen. Der Abluftkanal 12 ist mittels des als flächigen Trennblechs ausgeführten Trennelements 16 als Teil des Saatgutschachtes 11 ausgebildet insofern, dass der Abluftkanal 12 zumindest teilweise durch die Wandungen des Saatgutschachtes 11 gebildet ist. Das Trennelement 16 erstreckt sich von der Abscheideeinrichtung 13 bis zu der Auslassöffnung 14, so dass es dazu eingerichtet ist, den Abluftstrom 15 von den mittels der Abscheideeinrichtung 13 abgeschiedenen Körnern pneumatisch zu trennen.

Der Versorungskanal 9 weist eine Zuleitöffnung 17 zur Mündung des Vereinzelungsluftstroms 5 in die Dosierkammer 7 auf. Um besonders günstige Druckverhältnisse zwischen Abluftstrom 15 und Vereinzelungsluftstrom 5 zu schaffen, ist vorgesehen, dass die Zuleitöffnung 17 des Versorgungskanals 9 und die Auslassöffnung 14 des Abluftkanals 12 zumindest annährend den gleichen Abstand A zu der Vereinzelungsscheibe 8 beziehungsweise zu einer Ebene E, die sich radial durch die Vereinzelungsscheibe 8 erstreckt, aufweisen.

Um bereits auf der Vereinzelungsscheibe 8 anhaftende, vereinzelte Körner nicht wieder abzublasen, ist vorgesehen, dass die Auslassöffnung 14 derart angeordnet ist, dass die Strömung des Abluftstroms 15 aus der Auslassöffnung 14 keinen Schnittpunkt mit der Ebene E aufweist. Wie Fig.3 zeigt, ist die Auslassöffnung 14 so ausgerichtet, dass der Abluftstrom 15 zumindest annährend parallel zu der Vereinzelungsscheibe 8 in die Dosierkammer 7 eingeleitet wird. Bei dieser Kornvereinzelungsvorrichtung 4 ist vorgesehen, dass der Abluftstrom 15 die Mittelachse der Vereinzelungsscheibe 8 schneidet. In einer nicht gezeigten Ausführungsform wäre denkbar, dass die Auslassöffnung 14 von der Vereinzelungsscheibe 8 wegweist. Ferner ist vorgesehen, dass die Zuleitöffnung 17 des Versorgungskanals 9 derart angeordnet ist, dass die Strömung des Vereinzelungsluftstroms 5 aus der zuleitöffnung 17 keinen Schnittpunkt mit der Ebene E, die sich radial durch die Vereinzelungsscheibe 8 erstreckt, aufweist.

Wie die Fig.2 und 3 weiter zeigen, weist die Abscheideeinrichtung 13 ein als zylinderförmiges Siebelement 18 ausgebildetes zumindest teilweise luftdurchlässiges Element auf. Dieses Siebelement 18 ist zur Trennung des Korn-Luft-Mischstroms 6 in Körner und Abluftstrom 15 vorgesehen. Das Siebelement 18 ist zumindest annährend quer, vorzugsweise schräg, in der Abscheideeinrichtung 13 angeordnet und so geschaffen, dass die abzutrennenden Saatkörner nicht hindurchtreten können und somit unter Schwerkraftwirkung in den Saatgutschacht 11 gelangen. Der aus der Trennung resultierende Abluftstrom 15 hingegen kann durch das Siebelement 18 hindurchtreten und in den unmittelbar an das Siebelement 18 anschließenden Abluftkanal 12 eintreten. Um sicherzustellen, dass das Siebelement 18 nicht vollständig von Saatkörnern bedeckt wird, so dass das Hindurchtreten des Abluftstroms 15 verhindert oder gar unterbunden wird, ist vorgesehen, dass der Förderkanal 10 eine Fördermündung 19, aus der der Korn-Luft-Mischstrom an die Abscheideeinrichtung 13 übergeben wird, aufweist, die in Schwerkraftrichtung zumindest teilweise unterhalb des Siebelements 18 angeordnet ist. Somit kann der Abluftstrom 15 jederzeit zuverlässig durch den Abluftkanal 12 abgeleitet werden und es entsteht in vorteilhafter Weise zumindest annährend kein Staudruck, der auf den im Saatgutschacht 11 befindlichen Körnern lastet. Die Fördermündung 19 weist insbesondere einen kleineren vertikalen Abstand zur Mittelachse der Vereinzelungsscheibe 8 aus als zumindest Teile des Siebelements 18. In einer weiteren, nicht gezeigten Ausführungsform ist vorgesehen, dass die Fördermündung 19 in Schwerkraftrichtung einen Abstand von weniger als dem Zweifachen eines Durchmessers des Förderkanals 10 zu dem Siebelement 18 aufweist. Dieser Abstand misst sich von dem Siebelement 18 entgegen der Schwerkraftrichtung nach oben zur Fördermündung 19, so dass die Abscheideeinrichtung 13 auch in dieser nicht gezeigten Ausführungsform kompakt gestaltet ist.

Bei bestimmungsgemäßem Gebrauch ist die Kornvereinzelungsvorrichtung 4 regelmäßig so angeordnet, dass die Abscheideeinrichtung 13 oberhalb der Dosierkammer 7 angeordnet ist. Die abgeschiedenen Körner können somit unter Schwerkraftwirkung durch den Saatgutschacht 11 und einen Absperrschieber 20 hindurch der Vereinzelungsscheibe 8 bereitgestellt werden. Der Förderkanal 10 wird hierbei regelmäßig der Abscheideeinrichtung 13 vorzugsweise von oben zugeführt, so dass die Körner im Korn-Luft-Mischstrom nicht in dem Förderkanal 10 zum Erliegen kommen können.

Die Fördermündung 19 ist bei dieser Kornvereinzelungsvorrichtung 4 derart angeordnet, dass sie einen Abstand B von der Unterkante der Abscheideeinrichtung 13 und der Oberkante des Saatgutschachtes 11 aufweist, der maximal dem Vierfachen eines Durchmessers des Förderkanals 10 entspricht. Vorzugsweise entspricht der Durchmesser der lichten Weite der Öffnung aus der der Korn-Luft-Mischstrom an die Abscheideeinrichtung 13 übergeben wird, insbesondere also dem Durchmesser der Fördermündung 19. Es ist besonders bevorzugt, dass der Abstand B maximal dem zweifachen des Durchmessers des Förderkanals 10 entspricht.

Der Förderkanal 10 weist ferner an seinem Anschluss an die Abscheideeinrichtung 13 ein Y-förmiges Zwischenstück 21 auf. Alternativ oder zusätzlich weist die Fördermündung 19 einen Abstand C von dem Y-förmigen Zwischenstück 21 des Förderkanals 10 auf, der maximal dem Zweifachen eines Durchmessers des Förderkanals 10 entspricht. Vorzugsweise entspricht der Durchmesser der lichten Weite der Öffnung aus der der Korn-Luft-Mischstrom an die Abscheideeinrichtung 13 übergeben wird, insbesondere also dem Durchmesser der Fördermündung 19. Das Y-förmige Zwischenstück 21 kann dazu genutzt werden einen Teil des einer Kornvereinzelungsvorrichtung 4 zugeleiteten Korn-Luft-Mischstroms 6 an eine weitere Kornvereinzelungsvorrichtung 4 weiterzuleiten. Somit lassen sich zumindest zwei Kornvereinzelungsvorrichtungen 4 in Reihe schalten und von einem einzigen Förderkanal 10 mit Korn-Luft-Mischstrom 6 versorgen. In einer nicht gezeigten Ausführungsform kann das Zwischenstück 21 nicht Y-förmig sondern L-förmig ausgeführt sein, so dass sich nur eine einzige Kornvereinzelungsvorrichtung 4 mittels des Zwischenstücks 21 mit Korn-Luft-Mischstrom 6 versorgen lässt.

Besonders vorzugsweise alternativ oder zusätzlich weist das Zwischenstück 21 einen Abstand D von der Unterkante der Abscheideeinrichtung und/oder dem Saatgutschacht 11 auf, der weniger als dem Sechsfachen eines Durchmessers der Förderkanals 10 entspricht. Insbesondere entspricht der Durchmesser dem Durchmesser der Fördermündung 19.

Um einerseits eine einfache und schnelle Wartung zu ermöglichen und andererseits eine zuverlässige Funktionskontrolle durchzuführen ist vorgesehen, dass einerseits das Siebelement 18 werkzeuglos aus einer formschlüssigen Befestigung an der Abscheideeinrichtung 13 entnehmbar ist und andererseits die Abscheideeinrichtung 13 ein Sichtfenster zur Sichtkontrolle des Siebelements 18 aufweist. In einer nicht gezeigten Ausführungsform der Kornvereinzelungsvorrichtung 4 ist denkbar, dass die Kornvereinzelungsvorrichtung 4 nur eine dieser Maßnahmen zur Gewährleistung eines störungsfreien Betriebs aufweist.

Bei dieser Kornvereinzelungsvorrichtung 4 ist die Abscheideeinrichtung 13 zumindest zweiteilig ausgeführt, so dass sie ein Oberteil 13A und ein Unterteil 13B aufweist. Das Oberteil 13A ist bei dieser Kornvereinzelungsvorrichtung 4 aus einem transparenten Material geschaffen, so dass das gesamte Oberteil 13A als Sichtfenster dienen kann. Alternativ ist in einer nicht gezeigten Ausführungsform denkbar, dass die Abscheideeinrichtung 13 ausschnittsweise aus einem transparenten Material geschaffen ist oder einen Ausschnitt hierzu aufweist, so dass ein Sichtfenster geschaffen ist. Vorzugsweise ist das Sichtfenster an der Oberseite der Abscheideeinrichtung 13 angeordnet, so dass ein Benutzer in einfacher Weise von oben das Siebelement 18 auf Verstopfung kontrollieren kann. Das Sichtfenster ist derart ausgeführt, dass das Siebelement 18 einsehbar ist.

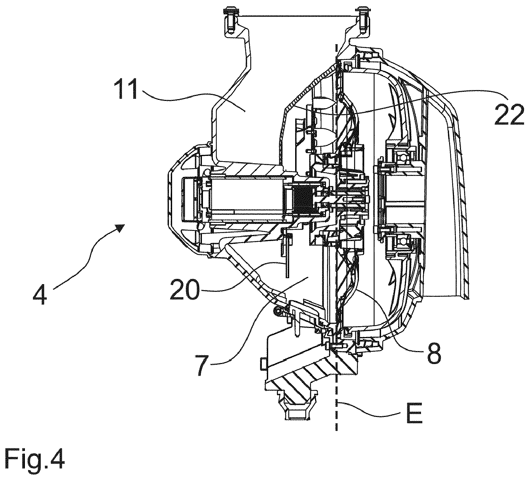

Eine weitere, alternative Ausführungsform einer Kornvereinzelungsvorrichtung 4 ist in Fig.4 in einer Schnittansicht gezeigt. Im Vergleich zu der vorstehend beschriebenen Kornvereinzelungsvorrichtung 4 weist diese Kornvereinzelungsvorrichtung 4 anstelle des als Trennblech ausgeführten Trennelements 16 ein Verschlussblech 22 auf. Anstelle von aus dem über den Förderkanal 10 zugeführten Korn-Luft-Mischstrom 6 mittels der Abscheideeinrichtung 13 abgeschiedenen Körnern ist diese Kornvereinzelungsvorrichtung 4 dazu eingerichtet, der Vereinzelungsscheibe 8 Körner über einen an den Saatgutschacht 11 anschließbaren, nicht gezeigten Saatgutbehälter zur Vereinzelung bereit zu stellen. Bei ansonsten gleichen Komponenten ist diese Kornvereinzelungsvorrichtung 4 somit mittels des Verschlussblechs 22 dazu konfiguriert mit dem Saatgutbehälter, welcher die zu vereinzelnden Körnern unter Einfluss der Schwerkraft in den Saatgutschacht 11 abgibt, betrieben zu werden. Die zu vereinzelnden Körner gelangen folglich durch den Saatgutschacht 11 und den Absperrschieber 20 zur Vereinzelungsscheibe 8. Mittels des Vereinzelungsluftstroms 5 in die Dosierkammer 7 werden die Körner dazu angeregt an der Vereinzelungsscheibe 8 anzuhaften und werden so vereinzelt. Der Abluftkanal 12 ist mittels des Verschlussbleches 22 zwischen der Dosierkammer 7 und dem Saatgutschacht 11 verschlossen, so dass der Saatgutschacht 11 lediglich der Zuleitung zu vereinzelnder Körner an die Vereinzelungsscheibe 8 dient. Aus fertigungstechnischer Sicht hat diese Ausführungsform den Vorteil, dass durch Austausch des Trennelements 16 durch das Verschlussblech 22 eine ansonsten baugleiche Kornvereinzelungsvorrichtung 4 zum Betrieb mit einem Saatgutbehälter anstelle eines Förderkanals 10 mit zugeordneter Abscheideeinrichtung 13 umrüstbar ist. Ferner lassen sich Kornvereinzelungsvorrichtungen 4 in einfacher Weise durch den Austausch zwischen Trennelement 16 und Verschlussblech 22 für den jeweiligen Einsatz mit einer Abscheideeinrichtung 13 oder einem Saatgutbehälter umrüsten.

Das Verschlussblech 22 kann vorzugsweise von Hand lösbar in die Kornvereinzelungsvorrichtung 4 einsetzbar sein. Das Trennelement 16 kann vorzugsweise von Hand demontierbar sein. Alternativ ist denkbar, dass das Trennelement 16 und das Verschlussblech 22 ein und dasselbe Bauteil sind, welches zwischen einer ersten Stellung als Trennelement 16 zur Bildung des Abluftkanals 12 und einer zweiten Stellung zum Verschluss des Abluftkanals 12 verschwenkbar ist. Die Kornvereinzelungsvorrichtung 4 kann eine Schnittstelle aufweisen, an der das Trennelement 16 und das Verschlussblech 22 anbaubar sind. Die Schnittstelle kann in dem Saatgutschacht 11 angeordnet sein. Das Trennelement 16 und/oder das Verschlussblech 22 kann mittels einer schnell lösbaren Verbindung in der Kornvereinzelungsvorrichtung 4 befestigt sein. Alternativ ist denkbar, dass das Trennelement 16 und das Verschlussblech 22 das gleiche Bauteil sind, welches schwenkbar an der Schnittstelle angeordnet ist.

### Bezugszeichenliste

- 1: Sämaschine
- 2: Gebläse
- 3: Vorratsbehälter
- 4: Kornvereinzelungsvorrichtung
- 5: Vereinzelungsluftstrom
- 6: Korn-Luft-Mischstrom
- 7: Dosierkammer
- 8: Vereinzelungsscheibe
- 9: Versorgungskanal
- 10: Förderkanal
- 11: Saatgutschacht
- 12: Abluftkanal
- 13: Abscheideeinrichtung
- 13A: Oberteil
- 13B: Unterteil
- 14: Auslassöffnung
- 15: Abluftstrom
- 16: Trennelement
- 17: Zuleitöffnung
- A: Abstand
- E: Ebene
- 18: Siebelement
- 19: Fördermündung
- 20: Absperrschieber
- B: Abstand
- C: Abstand
- 21: Zwischenstück
- D: Abstand
- 22: Verschlussblech

## Patentansprüche

1. Kornvereinzelungsvorrichtung (4) mit,
- einer Dosierkammer (7) und einer darin angeordneten Vereinzelungsscheibe (8);
- zumindest einem Versorgungskanal (9) zur Zuleitung eines von einem Gebläse (2) erzeugten Vereinzelungsluftstroms (5) in die Dosierkammer (7) zur Vereinzelung von Körnern mittels der Vereinzelungsscheibe (8);
- einem Förderkanal (10) zum Zuführen der Körner in Form eines von einem Gebläse (2) und einem Vorratsbehälter (3) erzeugten Korn-Luft-Mischstroms (6);
- einer dem Förderkanal (10) zugeordneten Abscheideeinrichtung (13), um die Körner aus dem Korn-Luft-Mischstrom (6) abzuscheiden und der Vereinzelungsscheibe (8) über einen Saatgutschacht (11) zur Vereinzelung bereit zu stellen und den daraus resultierenden Abluftstrom (15) über einen von dem Versorgungskanal (9) getrennten Abluftkanal (12) der Kornvereinzelungsvorrichtung (4) zur Vereinzelung der Körner zuzuleiten, wobei der Abluftkanal (12) eine Auslassöffnung (14) zur Mündung des Abluftstroms (15) aufweist, **dadurch gekennzeichnet, dass** der Abluftkanal (12) sich von der Abscheideeinrichtung (13) durch den Saatgutschacht (11) erstreckt, so dass die Auslassöffnung (14) in die Dosierkammer (7) mündet.

2. Kornvereinzelungsvorrichtung (4) nach Anspruch 1, **dadurch gekennzeichnet, dass** der Abluftkanal (12) mittels eines Trennelements (16) als Teil des Saatgutschachtes (11) ausgebildet ist.

3. Kornvereinzelungsvorrichtung (4) nach Anspruch 2, **dadurch gekennzeichnet, dass** das Trennelement (16) als flächiges Bauteil, insbesondere als Trennblech, ausgeführt ist.

4. Kornvereinzelungsvorrichtung (4) nach zumindest einem der vorstehenden Ansprüche, **dadurch gekennzeichnet, dass** der Versorgungskanal (9) eine Zuleitöffnung (17) zur Mündung des Vereinzelungsluftstroms (5) in die Dosierkammer (7) aufweist, dass die Zuleitöffnung (17) des Versorgungskanals (9) und die Auslassöffnung (14) des Abluftkanals (12) zumindest annährend den gleichen Abstand (A) zu der Vereinzelungsscheibe (8), insbesondere zu einer Ebene (E), die sich radial durch die Vereinzelungsscheibe (8) erstreckt, aufweisen.

5. Kornvereinzelungsvorrichtung (4) nach zumindest einem der vorstehenden Ansprüche, **dadurch gekennzeichnet, dass** die Zuleitöffnung (17) des Versorgungskanals (9) derart angeordnet ist, dass eine Strömung des Vereinzelungsluftstroms (5) aus der Zuleitöffnung (17) keinen Schnittpunkt mit einer Ebene (E) aufweist, die sich radial durch die Vereinzelungsscheibe (8) erstreckt.

6. Kornvereinzelungsvorrichtung (4) nach zumindest einem der vorstehenden Ansprüche, **dadurch gekennzeichnet, dass** die Auslassöffnung (14) des Abluftkanals (12) derart angeordnet ist, dass eine Strömung des Abluftstroms (15) aus der Auslassöffnung (14) keinen Schnittpunkt mit einer Ebene (E) aufweist, die sich radial durch die Vereinzelungsscheibe (8) erstreckt.

7. Kornvereinzelungsvorrichtung (4) nach zumindest einem der vorstehenden Ansprüche, **dadurch gekennzeichnet, dass** die Abscheideeinrichtung (13) ein zumindest teilweise luftdurchlässiges Element (18) zur Trennung des Korn-Luft-Mischstroms (6) in Körner und Abluftstrom (15) aufweist, das vorzugsweise als, besonders vorzugsweise zylinderförmiges, Siebelement (18) ausgebildet ist.

8. Kornvereinzelungsvorrichtung (4) nach Anspruch 7, **dadurch gekennzeichnet, dass** der Förderkanal (10) eine Fördermündung (19), aus der der Korn-Luft-Mischstrom (6) insbesondere an die Abscheideeinrichtung (13) übergeben wird, aufweist, dass die Fördermündung (19) in Schwerkraftrichtung einen Abstand von weniger als dem Zweifachen eines Durchmessers des Förderkanals (10) zu dem luftdurchlässigen Element (18) aufweist.

9. Kornvereinzelungsvorrichtung (4) nach Anspruch 8, **dadurch gekennzeichnet, dass** die Fördermündung (19) in Schwerkraftrichtung zumindest teilweise unterhalb des luftdurchlässigen Elements (18) angeordnet ist.

10. Kornvereinzelungsvorrichtung (4) nach zumindest einem der Ansprüche 7 bis 9, **dadurch gekennzeichnet, dass** das zumindest teilweise luftdurchlässige Element (18) werkzeuglos aus einer, vorzugsweise formschlüssigen, Befestigung an der Abscheideeinrichtung (13) entnehmbar ist.

11. Kornvereinzelungsvorrichtung (4) nach zumindest einem der Ansprüche 7 bis 10, **dadurch gekennzeichnet, dass** der Abluftkanal (12) sich unmittelbar an das zumindest teilweise luftdurchlässige Element (18) anschließt.

12. Kornvereinzelungsvorrichtung (4) nach zumindest einem der Ansprüche 7 bis 11, **dadurch gekennzeichnet, dass** die Abscheideeinrichtung (13) ein Sichtfenster zur Sichtkontrolle des zumindest teilweise luftdurchlässigen Elements (18) aufweist.

13. Kornvereinzelungsvorrichtung (4) nach zumindest einem der vorstehenden Ansprüche, **dadurch gekennzeichnet, dass** der Förderkanal (10) eine Fördermündung (19), aus der der Korn-Luft-Mischstrom (6) insbesondere an die Abscheideeinrichtung (13) übergeben wird, aufweist, dass die Fördermündung (19) einen Abstand (B) von der Unterkante der Abscheideeinrichtung (13) und/oder dem Saatgutschacht (11) aufweist, der maximal dem Vierfachen eines Durchmessers des Förderkanals (10) entspricht.

14. Sämaschine (1) mit zumindest einem Gebläse (2), zumindest einem Vorratsbehälter (3) für körniges Gut und zumindest einer Kornvereinzelungsvorrichtung (4), wobei das zumindest eine Gebläse (2) zur Erzeugung zumindest eines Vereinzelungsluftstroms (5) und/oder zumindest eines Korn-Luft-Mischstroms (6) mit in dem Vorratsbehälter (3) bevorrateten Körnern eingerichtet ist, **dadurch gekennzeichnet, dass** die zumindest eine Kornvereinzelungsvorrichtung (4) nach zumindest einem der Ansprüche 1 bis 13 ausgeführt ist.

## Claims

1. Grain singling apparatus (4) comprising
- a metering chamber (7) and a singling disk (8) arranged therein;
- at least one supply duct (9) for feeding a singling air flow (5) generated by a fan (2) into the metering chamber (7) for singling grains by means of the singling disk (8);
- a conveying duct (10) for supplying the grains in the form of a mixed grain/air flow (6) generated by a fan (2) and a storage container (3);
- a separating device (13), which is associated with the conveying duct (10), for separating the grains from the mixed grain/air flow (6) and proving them via a seed chute (11) to the singling disk (8) for singling, and feeding the resulting exhaust air flow (15) via an exhaust air duct (12) separate from the supply duct (9) to the grain singling apparatus (4) for singling the grains, the exhaust air duct (12) having a discharge opening (14) for outflow of the exhaust air flow (15), **characterized in that** the exhaust air duct (12) extends from the separating device (13) through the seed chute (11), so that the discharge opening (14) opens into the metering chamber (7).

2. Grain singling apparatus (4) according to claim 1, **characterized in that** the exhaust air duct (12) is formed as part of the seed chute (11) by means of a separating element (16).

3. Grain singling apparatus (4) according to claim 2, **characterized in that** the separating element (16) is designed as a planar component, in particular as a separating plate.

4. Grain singling apparatus (4) according to at least one of the preceding claims, **characterized in that** the supply duct (9) has a feed opening (17) for outflow of the singling air flow (5) into the metering chamber (7), **in that** the feed opening (17) of the supply duct (9) and the discharge opening (14) of the exhaust air duct (12) are at approximately the same distance (A) from the singling disk (8), in particular from a plane (E) which extends radially through the singling disk (8).

5. Grain singling apparatus (4) according to at least one of the preceding claims, **characterized in that** the feed opening (17) of the supply duct (9) is arranged such that a flow of the singling air flow (5) from the feed opening (17) has no point of intersection with a plane (E) which extends radially through the singling disk (8).

6. Grain singling apparatus (4) according to at least one of the preceding claims, **characterized in that** the discharge opening (14) of the exhaust air duct (12) is arranged such that a flow of the exhaust air flow (15) from the discharge opening (14) has no point of intersection with a plane (E) which extends radially through the singling disk (8).

7. Grain singling apparatus (4) according to at least one of the preceding claims, **characterized in that** the separating device (13) has an at least partially air-permeable element (18) for separating the mixed grain/air flow (6) into grains and exhaust air flow (15), which element is preferably designed as a sieve element (18), particularly preferably as a cylindrical sieve element.

8. Grain singling apparatus (4) according to claim 7, **characterized in that** the conveying duct (10) has a conveying outlet (19) from which the mixed grain/air flow (6) is transferred in particular to the separating device (13),**in that** the conveying outlet (19) is at a distance of less than twice a diameter of the conveying duct (10) from the air-permeable element (18) in the direction of gravity.

9. Grain singling apparatus (4) according to claim 8, **characterized in that** the conveying outlet (19) is arranged at least partially below the air-permeable element (18) in the direction of gravity.

10. Grain singling apparatus (4) according to at least one of claims 7 to 9, **characterized in that** the at least partially air-permeable element (18) can be removed without tools from a preferably form-fitting fastening on the separating device (13).

11. Grain singling apparatus (4) according to at least one of claims 7 to 10, **characterized in that** the exhaust air duct (12) is directly connected to the at least partially air-permeable element (18).

12. Grain singling apparatus (4) according to at least one of claims 7 to 11, **characterized in that** the separating device (13) has a viewing window for visual inspection of the at least partially air-permeable element (18).

13. Grain singling apparatus (4) according to at least one of the preceding claims, **characterized in that** the conveying duct (10) has a conveying outlet (19) from which the mixed grain/air flow (6) is transferred in particular to the separating device (13), **in that** the conveying outlet (19) is at a distance (B) from the lower edge of the separating device (13) and/or from the seed chute (11) that corresponds to at most four times the diameter of the conveying duct (10).

14. Seed drill (1) comprising at least one fan (2), at least one storage container (3) for granular material, and at least one grain singling apparatus (4), the at least one fan (2) being designed to generate at least one singling air flow (5) and/or at least one mixed grain/air flow (6) with grains stored in the storage container (3),**characterized in that** the at least one grain singling apparatus (4) is designed according to at least one of claims 1 to 13.

## Revendications

1. Dispositif de dispersion de grains (4) comportant
- une chambre de dosage (7) et un disque de dispersion (8) disposé dans celle-ci ;
- au moins un canal d'alimentation (9) pour l'amenée d'un flux d'air de dispersion (5) généré par une soufflante (2) dans la chambre de dosage (7) pour la dispersion de grains au moyen du disque de dispersion (8) ;
- un canal de transport (10) pour l'alimentation des grains sous la forme d'un flux mixte grains-air (6) généré par une soufflante (2) et un réservoir de stockage (3) ;
- un appareil de séparation (13) associé au canal de transport (10) afin de séparer les grains du flux mixte grains-air (6) et de les mettre à disposition du disque de dispersion (8) par l'intermédiaire d'un puits à semence (11) pour la dispersion et d'amener le flux d'air d'évacuation (15) qui en résulte au dispositif de dispersion de grains (4) par l'intermédiaire d'un canal d'air d'évacuation (12) séparé du canal d'alimentation (9) pour la dispersion des grains, dans lequel le canal d'air d'évacuation (12) présente une ouverture de sortie (14) pour l'embouchure du flux d'air d'évacuation (15), **caractérisé en ce que** le canal d'air d'évacuation (12) s'étend depuis l'appareil de séparation (13) et à travers le puits à semence (11), de sorte que l'ouverture de sortie (14) débouche dans la chambre de dosage (7).

2. Dispositif de dispersion de grains (4) selon la revendication 1, **caractérisé en ce que** le canal d'air d'évacuation (12) est réalisé au moyen d'un élément de division (16) en tant que partie du puits à semence (11).

3. Dispositif de dispersion de grains (4) selon la revendication 2, **caractérisé en ce que** l'élément de division (16) est mis en œuvre sous forme de composant plat, en particulier sous forme de tôle de division.

4. Dispositif de dispersion de grains (4) selon au moins l'une des revendications précédentes, **caractérisé en ce que** le canal d'alimentation (9) présente une ouverture d'amenée (17) pour l'embouchure du flux d'air de dispersion (5) dans la chambre de dosage (7), **en ce que** l'ouverture d'amenée (17) du canal d'alimentation (9) et l'ouverture de sortie (14) du canal d'air d'évacuation (12) présentent au moins approximativement la même distance (A) par rapport au disque de dispersion (8), en particulier par rapport à un plan (E) qui s'étend radialement à travers le disque de dispersion (8).

5. Dispositif de dispersion de grains (4) selon au moins l'une des revendications précédentes, **caractérisé en ce que** l'ouverture d'amenée (17) du canal d'alimentation (9) est disposée de telle sorte qu'un écoulement du flux d'air de dispersion (5) provenant de l'ouverture d'amenée (17) ne présente pas de point d'intersection avec un plan (E) s'étendant radialement à travers le disque de dispersion (8).

6. Dispositif de dispersion de grains (4) selon au moins l'une des revendications précédentes, **caractérisé en ce que** l'ouverture de sortie (14) du canal d'air d'évacuation (12) est disposée de telle sorte qu'un écoulement du flux d'air d'évacuation (15) provenant de l'ouverture de sortie (14) ne présente pas de point d'intersection avec un plan (E) s'étendant radialement à travers le disque de dispersion (8).

7. Dispositif de dispersion de grains (4) selon au moins l'une des revendications précédentes, **caractérisé en ce que** l'appareil de séparation (13) présente un élément (18) au moins partiellement perméable à l'air pour la division du flux mixte grains-air (6) en grains et en flux d'air d'évacuation (15), lequel élément est de préférence réalisé sous forme d'élément de tamisage (18), de préférence de forme cylindrique.

8. Dispositif de dispersion de grains (4) selon la revendication 7, **caractérisé en ce que** le canal de transport (10) présente une embouchure de transport (19) à partir de laquelle le flux mixte grains-air (6) est en particulier transféré à l'appareil de séparation (13), **en ce que** l'embouchure de transport (19) présente, dans la direction de la force de gravité, une distance inférieure au double d'un diamètre du canal de transport (10) par rapport à l'élément (18) perméable à l'air.

9. Dispositif de dispersion de grains (4) selon la revendication 8, **caractérisé en ce que** l'embouchure de transport (19) est disposée au moins partiellement en dessous de l'élément (18) perméable à l'air dans le sens de la force de gravité.

10. Dispositif de dispersion de grains (4) selon au moins l'une des revendications 7 à 9, **caractérisé en ce que** l'élément (18) au moins partiellement perméable à l'air peut être retiré sans outil d'une fixation, de préférence par complémentarité de forme, sur l'appareil de séparation (13).

11. Dispositif de dispersion de grains (4) selon au moins l'une des revendications 7 à 10, **caractérisé en ce que** le canal d'air d'évacuation (12) se raccorde directement à l'élément (18) au moins partiellement perméable à l'air.

12. Dispositif de dispersion de grains (4) selon au moins l'une des revendications 7 à 11, **caractérisé en ce que** l'appareil de séparation (13) présente une fenêtre de visualisation pour le contrôle visuel de l'élément (18) au moins partiellement perméable à l'air.

13. Dispositif de dispersion de grains (4) selon au moins l'une des revendications précédentes, **caractérisé en ce que** le canal de transport (10) présente une embouchure de transport (19) à partir de laquelle le flux mixte grains-air (6) est en particulier transféré à l'appareil de séparation (13), **en ce que** l'embouchure de transport (19) présente une distance (B) par rapport au bord inférieur de l'appareil de séparation (13) et/ou au puits à semence (11), laquelle distance correspond au maximum à quatre fois un diamètre du canal de transport (10).

14. Semoir (1) comportant au moins une soufflante (2), au moins un réservoir de stockage (3) pour un produit en grains et au moins un dispositif de dispersion de grains (4), dans lequel l'au moins une soufflante (2) est configurée pour générer au moins un flux d'air de dispersion (5) et/ou au moins un flux mixte grains-air (6) comportant des grains stockés dans le réservoir de stockage (3), **caractérisé en ce que** l'au moins un dispositif de dispersion de grains (4) est mis en œuvre selon au moins l'une des revendications 1 à 13.
